# EUROPEAN PATENT SPECIFICATION

(11) **EP 4 437 853 B1**
(45) Date of publication and mention of the grant of the patent: **18.03.2026**
(21) Application number: 23165445.0
(22) Date of filing: 30.03.2023
(51) Int. Cl.: A22C 11/12

(54) **SYSTEM AND METHOD FOR FEEDING FLEXIBLE SUSPENSION ELEMENTS TO A SAUSAGE-SHAPED PRODUCT**
SYSTEM UND VERFAHREN ZUM ZUFÜHREN VON FLEXIBLEN AUFHÄNGUNGSELEMENTEN ZU EINEM WURSTFÖRMIGEN PRODUKT
SYSTÈME ET PROCÉDÉ POUR ALIMENTER DES ÉLÉMENTS DE SUSPENSION FLEXIBLES À UN PRODUIT EN FORME DE SAUCISSE

(43) Date of publication of application: 02.10.2024
(73) Proprietor: Poly-clip System GmbH & Co. KG, 65795 Hattersheim (DE)
(72) Inventor: Waldstädt, Manfred, 55124 Mainz (DE)
(74) Representative: Eisenführ Speiser

(56) References cited:
- EP-A1- 0 171 669
- EP-A1- 2 465 354
- EP-A1- 2 907 392
- EP-A2- 2 225 948
- EP-A2- 2 277 383
- WO-A1-97/17856

## Description

The present invention relates to a system and a method for producing sausage-shaped products, like sausages, by filling a filling material into a tubular packaging casing. In particular, the present invention relates to a system and a method for producing sausage-shaped products, in which the system includes a clipping machine and a feeding device for feeding flexible suspension elements to said clipping machine.

In practice, packaging machines, such as clipping machines, are known for producing sausage-shaped products, such as sausages, in which filling material, such as a flowable or granular filling material, is fed into a tubular or bag-shaped packaging casing which is stored or supported on a filling tube and which is closed at its front end by closure means, such as at least one closure clip, i.e. the end of the packaging casing facing in the feeding direction of the filling material. After a predetermined portion or amount of filling material has been filled into the tubular or bag-shaped packaging casing, the filled tubular or bag-shaped packaging casing is gathered by gathering means, a plait-like portion or section which is at least substantially free from filling material is formed thereto, and at least a first closure clip is placed and closed on said plait-like portion by a clipping device for closing the portion of the tubular or bag-shaped packaging casing just filled. Additionally, a second closure clip can be placed for closing the front end of the sausage-shaped product to be produced next. For separating the sausage-shaped product just produced from the remaining supply of a tubular or bag-shaped packaging casing, a cutting device may be provided for cutting off the plait-like portion between the first and second closure clip.

If it is intended to store or deposit said sausage-shaped products on a rod-like or rod-shaped element, such as a smoking rod, e.g. for further treatment such as cooking or smoking, a suspension element, such as a suspension loop, can be provided by a feeding device to the clipping machine to be attached to one end of each of the sausage-shaped products or to one end of a chain of sausage-shaped products by the closure clip that closes the respective end of the sausage-shaped product. With the attachment of the suspension element to one end of each of sausage-shaped product, it is captured or caught by a catching element, such as a catching needle or a sword, and guided to a hanging line when the sausage-shaped product is discharged from the clipping machine by a discharge device, such as a belt conveyor. In the hanging line, the sausage-shaped product or chain of sausage-shaped products is suspended on a rod-like element for further treatment. For checking the quality of the sausage-shaped products, such as their weight or size, provision can be made to remove one or more sausage-shaped products from the clipping machine without suspending them on a rod-like element.

EP patent application 2 225 948 describes a feeding device for suspension elements for feeding flexible suspension elements in a clipping machine, wherein the suspension elements are arranged in a loop, transversely to the conveying direction, on a carrier belt by means of an adhesive in a detachable manner and are conveyed by means of the carrier belt to a dispensing location at which a suspension element is removed from the carrier belt. In the area of the dispensing location for the suspension elements, a holding-down device is provided above the carrier belt.

From EP patent application 2 277 383, an apparatus for automatically suspending sausages produced in a clipping machine with their suspension loops on a smoking rod is known, which includes a catching device for catching the suspension loops of said sausages. For checking the weight of one of the sausage, the delivery device for delivering the suspension elements to the clipping machine includes a slider that can be reversibly moved by a respective drive to a position between the frontmost suspension element provided by the delivery device to the clipping machine and the tip end of the catching element of the catching device. This prevents the suspension element from being captured by said catching device and thus from being suspended from a smoking rod.

In order to reliably prevent the transfer of suspension elements or suspension loops to the catching element of the catching device regardless of the size of the loops, the length of the path of movement of the slider of this known delivery device has to be selected to match the size of the largest possible loops or the movement of the slider has to be adapted to the size of the suspension loops to be processed, which is of complex in terms of construction and requires a high level of control effort. Furthermore, the known slider has a specific design that is adapted to the design of the catching element. Accordingly, the field of application of this known delivery device is limited to a specific type of suspension apparatuses having a specific catching device.

Thus, it is the object of the present invention to overcome the above drawbacks and to provide a system and a method for producing sausage-shaped products having a reduced construction and control complexity and allowing a catching unit to securely grasp a suspension element.

According to the present invention, a system for producing sausage-shaped products by filling a flowable or granular filling material into a tubular packaging casing is provided. The system includes at least a clipping machine and a control unit for controlling at least the clipping machine. The clipping machine comprises a clipping device having first and second closing tools reversibly movable between an open position and a closed position, for applying closure means, such as at least one closure clip, to a plait-like portion or section formed on a filled and gathered tubular packaging casing, and closing said closure means by moving the closing tools to their closed position. The system further comprises a feeding device for feeding flexible suspension elements in a feeding direction to the clipping machine to a pick-up or catching position for being attached to a sausage-shaped product by means of the closure means, and a catching unit for capturing or catching a suspension element attached to the sausage-shaped product.

In the system according to the invention, the feeding device includes means for selectively or optionally deforming a flexible suspension element as it is fed into the pick-up position to prevent said flexible suspension element from being captured or caught by the catching unit.

The deformation of the suspension element prevents the respective portion of the suspension element from being positioned below the catching unit, so that said deformed suspension element cannot be captured by the catching unit. Accordingly, the sausage-shaped product to which said suspension element is attached, is not transferred to following device, such as a hanging line, and can be removed from the clipping machine, e.g. for a quality check. As a result, it is not necessary to cut off the suspension element of the sausage-shaped product to be removed from the clipping machine, and said sausage-shaped product can be reintroduced into the treatment process at a later stage, for example by manually suspending said sausage-shaped product on a smoking rod.

Sausage-shaped products produced on a clipping machine by filling a flowable or granular filling material into a tubular packaging casing may be sausages consisting of a tubular casing, such as synthetic casing or natural casing, filled with sausage meat. However, sausage-shaped products within the meaning of the present technical teaching may also be formed by a tubular casing filled with other material than sausage meat, such as other foodstuffs or adhesives, greases or the like.

The closure means used for closing the front end and/or rear end of a sausage-shaped product are usually at least approximately U-shaped clips made of metal, such as aluminium. Said clips may be provided as a line or series of clips (known as R-clips) or in the form of sticks (known as S-clips). Moreover, the clips may also be manufactured of a suitable plastic. However, closure means according to the present invention may also have any other suitable shape which allows a tubular packaging casing to be closed by said closure means, such as L-shaped elements, or may be flat elements having a slot into which the packaging casing can engage to be closed.

A suspension element may have any suitable design that allows a sausage-shaped product to which said suspension element is attached to be suspended on or from a rod-like element, such as a smoking rod. Preferably, suspension elements used in the manufacture of sausage-shaped products have the shape of a closed loop, e.g. made of a piece of thread knotted into a loop. Alternatively, suspension elements may also have the form of the digit "8", with two openings, one opening in which a closure clip can engage and a second opening through which a rod-like element can protrude. The suspension elements may be made of various flexible materials, such as plastic or textile.

In a preferred embodiment of the inventive system, the means for selectively or optionally deforming a flexible suspension element include at least one control pin which is reversibly movable in a first direction between a release position, in which a suspension element arranged in the pick-up or catching position can be captured or gripped by the catching unit, and a blocking position, in which a suspension element arranged in the pick-up position cannot be captured or caught by the catching unit. In the blocking position, the control pin reliably prevents the suspension element from being positioned below the catching unit, regardless of the size and/or shape of the suspension element used.

For preventing suspension elements from being captured by the catching unit, it is of advantage that the control pin in the blocking position engages a gap or intermediate space between a suspension element arranged in the pick-up position for attachment to a sausage-shaped product and a subsequent suspension element to be attached next to a sausage-shaped product. As a result, the suspension element is deformed by the control pin when the subsequent suspension element is fed into the pick-up position and is prevented from being captured by the catching unit.

It is further of advantage that the first direction is oriented at least approximately perpendicular to the feeding direction of the suspension elements in order to deform the suspension element safely and sufficiently.

In a further preferred embodiment of the system according to the invention, the control pin is reversibly movable in a second direction that is oriented at least approximately parallel to the feeding direction of the suspension elements, in order to adapt the position of the control pin to the size of the suspension elements.

The control pin can be driven in any suitable manner between the release position and the blocking position. In a preferred design, the means for deforming a flexible suspension element include a drive unit for reversibly driving the control pin between the release position and the blocking position, which allows a high production rate and an increased degree of automation. However, it is also possible that the means for deforming a flexible suspension element can be operated manually.

To enable a secure or safe operation of the inventive system, it is further of advantage that the operation of the means for selectively or optionally deforming a flexible suspension element is controlled by the control unit. The function of the deforming means may, for example, be implemented in a programming for producing specific sausage-shaped products, such as actuation intervals, or may be a separate function that is individually selectable by an operator.

In the system according to the invention, the feeding device may further include a holding-down device for holding down a suspension element fed to the clipping machine, thereby ensuring controlled movement of the suspension element or parts thereof.

In a preferred embodiment, the holding-down device includes a hold-down element arranged at least approximately vertically above the suspension elements fed to the clipping machine. Said hold-down element prevents a suspension element from accidentally crossing the control pin arranged in the blocking position or from interlocking or catching on other machine parts when being fed into the pick-up position.

Further, in accordance with the present invention, there is provided a method for controlling a system for producing sausage-shaped products, such as sausages. The method comprises the steps of applying at least one closure means, such as a closure clip, to a plait-like portion or section formed to or on a filled and gathered or shirred tubular packaging casing, and closing said closure means by a clipping device having first and second closing tools reversibly movable between an open position and a closed position, feeding flexible suspension elements by a feeding device in a feeding direction to the clipping machine into a pick-up or catching position for attaching a suspension element to a sausage-shaped product by means of the at least one closure means, and capturing a suspension element attached to the sausage-shaped product by a catching device. The method further comprises the steps of deforming a flexible suspension element by means for selectively or optionally deforming a flexible suspension element, while it is being fed into the pick-up position such that said flexible suspension element is prevented from being captured by the catching device.

The optional or selective deformation of a suspension element may be performed at regular intervals or selectively based on a program and/or an operator. Even in the case of a deformation of a suspension element in regular intervals, deformation can be performed on a random intervention triggered by a program and/or an operator.

According to the inventive method, a flexible suspension element is optionally or selectively deformed by a control pin of the means for optionally or selectively deforming a suspension element, the control pin being positioned in a blocking position.

The inventive method may further comprise the step of manually activating the means for selectively or optionally deforming a suspension element, for reversibly moving the control pin from a release position into the blocking position.

Alternatively or additionally, the method according to the invention may comprise the step of automatically activating the means for selectively or optionally deforming a suspension element to reversibly move the control pin from a release position into the blocking position.

The method may further comprise the step of adapting the position of the control pin to the size of the suspension elements by reversibly moving the control pin of the means for selectively or optionally deforming a suspension element in a second direction oriented at least approximately parallel to the feeding direction of the flexible suspension elements.

The inventive method for controlling a system for producing sausage-shaped products thereby realizes all advantages explained in conjunction with the inventive system.

Further advantages and preferred embodiments of the present invention will be described in the following together with the drawings listed below. The expressions *"left", "right", "below"* and *"above"* used in the following description, are referred to the drawings in an alignment such that the reference numbers and the notation of the figures used can be read in normal orientation.
- Fig. 1:: is a schematic view showing the principal design of a system for producing sausage-shaped products;
- Fig. 2:: is a perspective view to a feeding device for feeding flexible suspension elements to a clipping machine according to the present invention;
- Fig. 3:: is a partial side view to a feeding unit of the feeding device of Fig. 2 for feeding a flexible suspension element into a pick-up position, with a control pin in a release position;
- Fig. 4:: is a plan view to the feeding unit shown in Fig. 3;
- Fig. 5:: is a partial side view to the feeding unit of the feeding device of Fig. 2 for feeding a flexible suspension element into a pick-up position, with the control pin in a blocking position; and
- Fig. 6:: is a plan view to the feeding unit shown in Fig. 5.

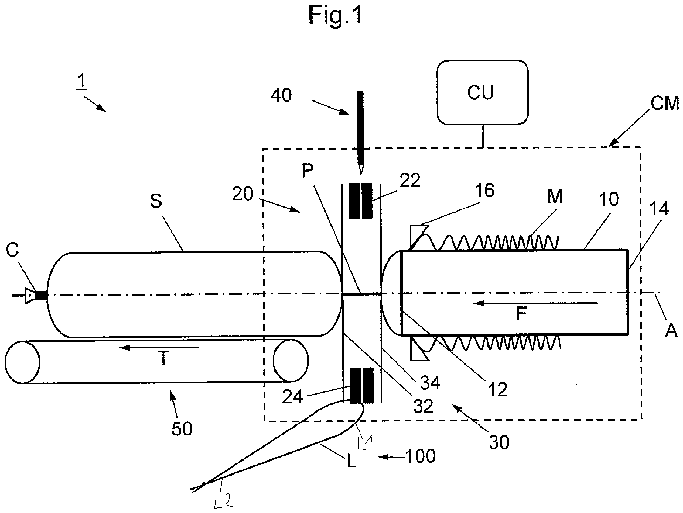

The general design of a system 1 for producing sausage-shaped products S, such as sausages, containing a flowable or granular filling material in a tubular packaging casing M, is shown schematically in Fig. 1.

System 1 comprises as its main components a clipping machine CM having a filling tube 10 with a central axis A extending longitudinally and, in the embodiment shown, horizontally. Filling tube 10 has at its first end 12 a discharge opening for discharging a filling material fed or guided through filling tube 10 and at its second end 14 a feeding opening for feeding the filling material into filling tube 10. The filling material is conveyed or fed from the feeding opening in a feeding direction F to the discharge opening of filling tube 10, for example by a feed pump of filler. Moreover, in the region of first end 12 of filling tube 10, a casing brake assembly 16 is arranged on and coaxially to filling tube 10. Filling tube 10 is made of a suitable material, such as stainless steel. In addition to the horizontal orientation shown, filling tube 10 can also extend at an angle to the horizontal.

Tubular packaging casing M made of a thin sheet or film material is mounted or stored on filling tube 10 folded in an accordion like manner. Tubular packaging casing M is pulled-off during the manufacturing process of producing sausage-shaped products S, in particular by the feeding pressure, when the filling material is filled into tubular packaging casing M. Casing brake assembly 16 provides an preferably adjustable braking force which enables a controlled pulling-off of tubular packaging casing M from filling tube 10 during the filling process.

Clipping machine CM further comprises gathering means 30 for gathering or shirring a section of the filled tubular packaging casing M and forming a plait-like portion or section P thereto. In addition, a clipping device 20 is provided for closing a portion of tubular packaging casing M just filled by applying or attaching closure means, such as at least one closure clip C, to plait-like portion P and preferably closing the front end of the next section of tubular packaging casing M to be filled by further closure means, such as a at least one further closure clip C. These components are all arranged downstream filling tube 10.

As can be inferred from Fig. 1, clipping device 20 is positioned immediately downstream first end 12 of filling tube 10, and is aligned coaxially with filling tube 10, i.e. when closure tools of clipping device 20 are moved together to close one or more closure means C, the axis of the plait-like portion P extends at least approximately coaxially to central axis A of filling tube 10.

Clipping device 20 comprises first and second clipping tools 22, 24 formed by at least one punch 22 and at least one die 24. It should be noted that punch 22 and die 24 can apply and close a single closure clip C for closing a just filled tubular packaging casing M, or can apply and close two or more closure clips C at the same time, a first closure clip C for closing the rear end of a just filled tubular packaging casing M for forming a sausage-shaped product S and a second closure clip C for closing the front end of a tubular packaging casing M to be subsequently filled.

Gathering means 30 include a first displacer unit 32 and a second displacer unit 34, wherein first displacer unit 32 is positioned downstream second displacer unit 34. First and second clipping tools 22, 24 of clipping device 20 may be positioned between first and second displacer units 32, 34 to apply and close one or more closure clips C to plait-like portion P. First displacer unit 32 can reversibly be moved parallel to feeding direction F of the filling material to form a plait-like portion P of a desired length.

If it is intended to store sausage-shaped products S on a rod-like element, such as a smoking rod, e.g. for further processing, such as cooking or smoking, a suspension element L, such as a suspension loop, may be provided and attached to one end of each sausage-shaped product S or to one end of a chain of sausage-shaped products S. A feeding device 100 feeds suspension elements L to one of closing tools 22, 24 which attach suspension element L to a respective end of sausage-shaped product S by means of a closure clip C which closes said end of sausage-shaped product S. Suspension element L has a first end L1 directed or facing towards clipping tools 22, 24 in the closing or clipping area or region of clipping machine CM, and a second end L2 facing away from the closing region. Suspension elements L are arranged adhering to a carrier strip or tape CT in such a way that their first ends L1 extend beyond one edge of carrier tape CT that faces towards closing tools 22, 24 and their second ends L2 extend beyond the opposite edge of carrier strip CT.

For separating sausage-shaped product S just produced from the remaining tubular packaging casing M stored or supported on filling tube 10, a cutting device 40 may be provided. Said cutting device 40 cuts the tubular packaging casing M downstream closure clip C that closes the just filled portion of tubular packaging casing M. In case that two closure clips C have been applied to plait-like portion P by clipping device 20, cutting device 40 cuts plait-like portion P between said two closure clips C.

For discharging a sausage-shaped product S just produced from clipping machine CM in a transportation direction T at least substantially coinciding with feeding direction F, a discharge device 50 is arranged downstream clipping device 20, which may be a belt conveyor comprising a conveyor belt and guide rollers.

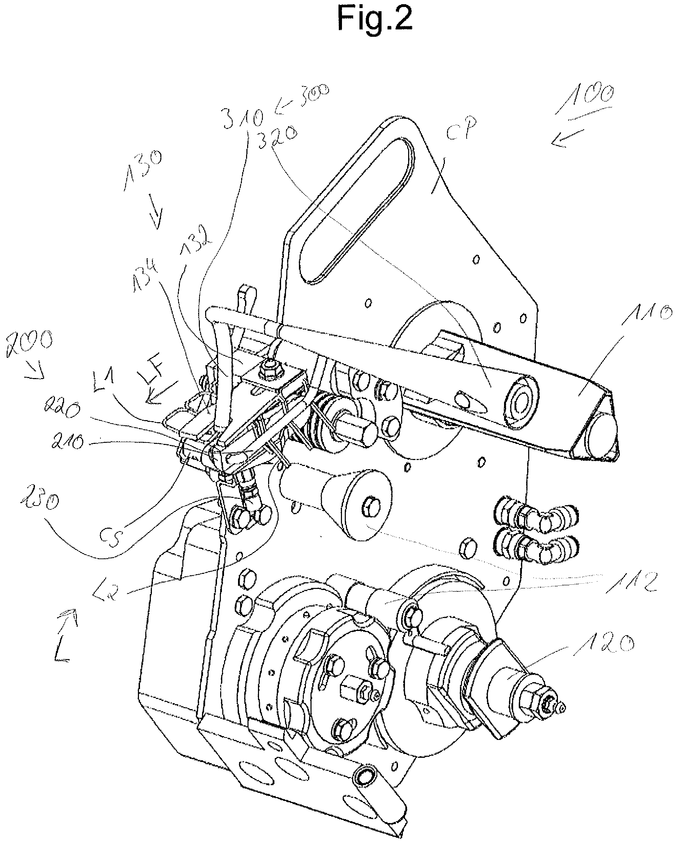

For storing or depositing sausage-shaped products S on a rod-like element, suspension element L is captured or caught by a catching unit (cf. Fig. 2) which includes at least a catching element, such as a catching needle, and is provided for guiding suspension element L to the rod-like element.

Clipping machine CM further comprises a control unit CU for controlling at least clipping machine CM, particularly the components of clipping machine CM, such as first and second clipping tools 22, 24 of clipping device 20 and first and second displacer units 32, 34 of gathering means 30.

Fig. 2 is a perspective view to a feeding device 100 of the clipping machine CM for feeding flexible suspension elements L to a pick-up position in which a suspension element L can be picked-up or caught.

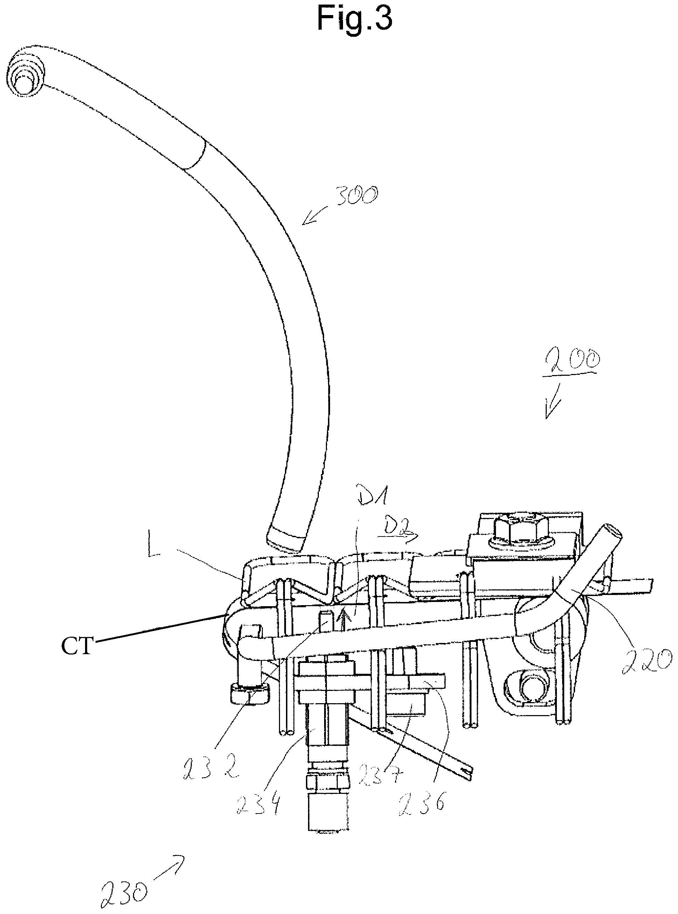

Feeding device 100 according to the embodiment of Fig. 2 includes a vertically oriented support or carrier plate CP on which the main components of feeding device 100 are mounted. These main components are a first at least approximately horizontally aligned shaft 110 for receiving and holding a supply of suspension elements L (not shown in Fig. 2), e.g. in the form of suspension elements L arranged on a carrier strip or tape CT, for example by an adhesive layer, and wound on a roll, a second at least approximately horizontally aligned shaft 120 on which empty carrier strip or tape CT (cf. Fig. 3) is wound after suspension elements L have been removed therefrom, and a feeding unit 200 for feeding suspension elements L to the pick-up or catching position which is the foremost position of carrier strip CT still provided with suspension elements L in feeding direction LF. Feeding device 100 further includes at least approximately horizontally aligned guide rollers 112 around which carrier strip CT is wound when it is guided from first shaft 110 to second shaft 120 via feeding unit 200.

As can be seen particularly in Fig. 3, feeding unit 200 comprises a base plate 210 defining a guide path along which carrier strip CT with suspension elements L is guided for feeding a suspension element L to the pick-up position. Base plate 210 may be oriented horizontally or at an angle to the horizontal. Feeding unit 200 further comprises a deflection bar or rod 220 for deflecting second or rear end L2 of suspension elements L downward to prevent rear ends L2 of suspension elements L from interfering with other components of clipping machine CM and/or feeding device 100. Deflection bar 220 is mounted with one end (the left end in Fig. 3) to base plate 210 and extends at least approximately parallel thereto at least approximately parallel to feeding direction LF of suspension elements L. Second ends L2 of suspension elements L are guided in the gap between deflection bar 220 and base plate 210.

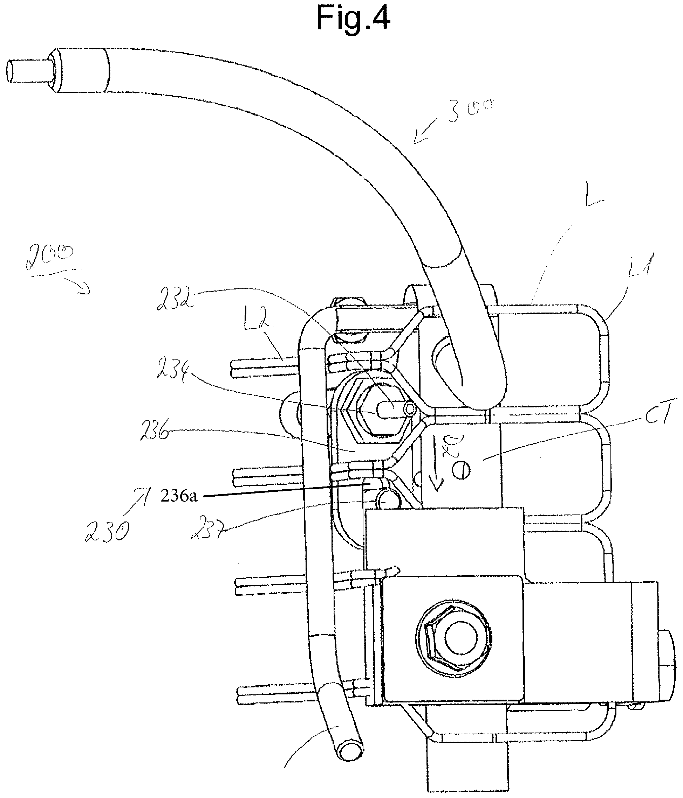

Feeding unit 200 further comprises means for selectively or optionally deforming a suspension element L as it is fed into the pick-up position, further referred as deforming means 230. Feeding unit 200 will be explained in detail below in conjunction with Figs. 4 to 6.

As can be seen in Fig. 2, a holding down or holding-down device 130 is arranged above feeding unit 200 and includes a bracket 132, by means of which holding-down device 130 is mounted to carrier plate CP, and a hold-down element 134 which extends at least approximately parallel to base plate 210, is fixed to bracket 132 and extends in feeding direction LF of suspension elements L so as to cover the upper region of feeding unit 200. This prevents suspension elements L from becoming prematurely detached from carrier tape CT.

In Fig. 2, a catching or picking-up unit 300 is shown in its position relative to feeding device 100 above feeding unit 200. Catching unit 300, which in this embodiment is a catching needle, has an approximately circular cross-section, a curved front end 310 and a straight rear end 320. Curved front end 310 extends towards feeding unit 200 and terminates in the pick-up position immediately above suspension element L. Rear end 320 is arranged at least approximately horizontally and faces away from feeding device 100. Catching unit or catching needle 300 is coupled via rear end 320 to a guide rod or the like (not shown), via which a suspension element L captured or caught by catching needle 300 is guided onto a rod-like element, such as a smoking rod.

As can be seen in Fig. 2, a slot is arranged in the front area of hold-down element 134, the width of which corresponds to the diameter of the tip of curved front end 310 of catching needle 300 which engages or extends into said slot.

Figs. 3 and 4 show feeding unit 200 of the feeding device 100. For clarity reasons, base plate 120 has been omitted so that deforming means 230 is visible in detail.

Deforming means 230 includes at least a control pin 232 that can be reversibly driven in a first direction D1 along its longitudinal extension by a respective drive unit 234 in the form of a piston/cylinder drive. Control pin 232 extends upwardly or at least approximately perpendicular to feeding direction LF and is coupled to a piston of drive unit 234 or may itself form the piston, so that control pin 232 and drive unit 234 are arranged at least approximately coaxially with respect to each other and approximately vertically.

Deforming means 230 further includes an at least approximately horizontally arranged mounting plate 236, to one end of which drive unit 234 is attached. With the respective other end of mounting plate 236, deforming means 230 is fixed to base plate 120 by a respective screw 237.

As can be seen particularly in Fig. 4, screw 237 for mounting deforming means 230 to base plate 120 extends through an elongated hole 236a in mounting plate 236, which is aligned in a direction at least approximately parallel to feeding direction LF of suspension elements L. This allows reversible movement of deforming means 230 in a second direction D2 to adjust the position of deforming means 230 relative to suspension elements L to be processed, depending on the size and/or width of suspension elements L.

Deforming means 230 is arranged below suspension elements L provided on carrier strip CT such that control pin 232 can move in and out or up and down between suspension element L in the pick-up position and the subsequent suspension element L arranged immediately behind said suspension element L in the pick-up position and laterally on the side of carrier strip CT from which second or rear ends L2 of suspension elements L extend.

In the situation shown in Figs. 3 and 4, control pin 232 is in the release position. That is, control pin 232 is retracted downwardly by drive unit 234 so that the upper tip of control pin 232 is positioned horizontally below suspension elements L on carrier strip CT. Accordingly, control pin 232 does not extend into the gap or space between suspension element L in the pick-up position and the subsequent suspension element L so that suspension elements L may pass control pin 232 without being affected by control pin 232. The gap or space between successive suspension or suspension loops L is located between first and second ends L1, L2 of said successive suspension elements or suspension loops L.

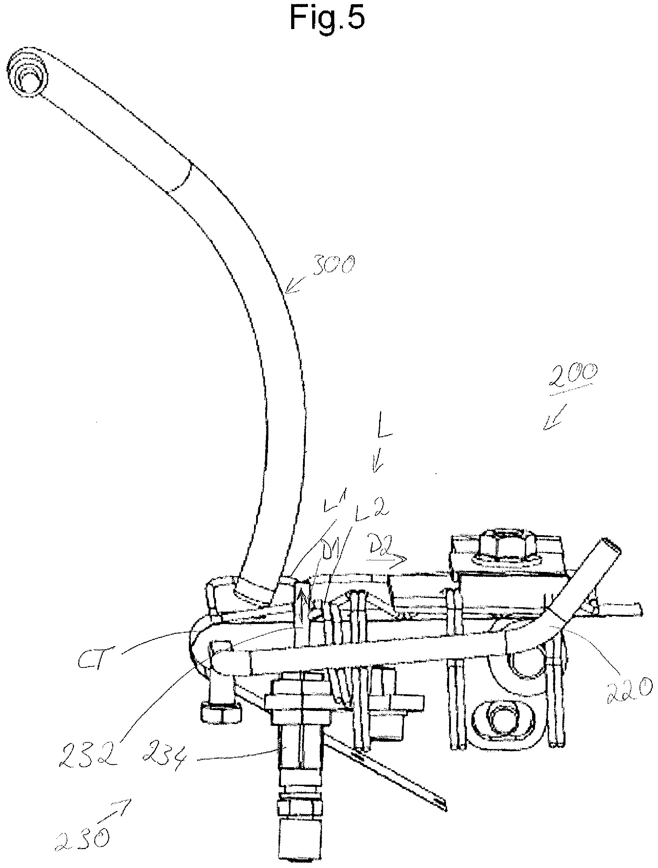

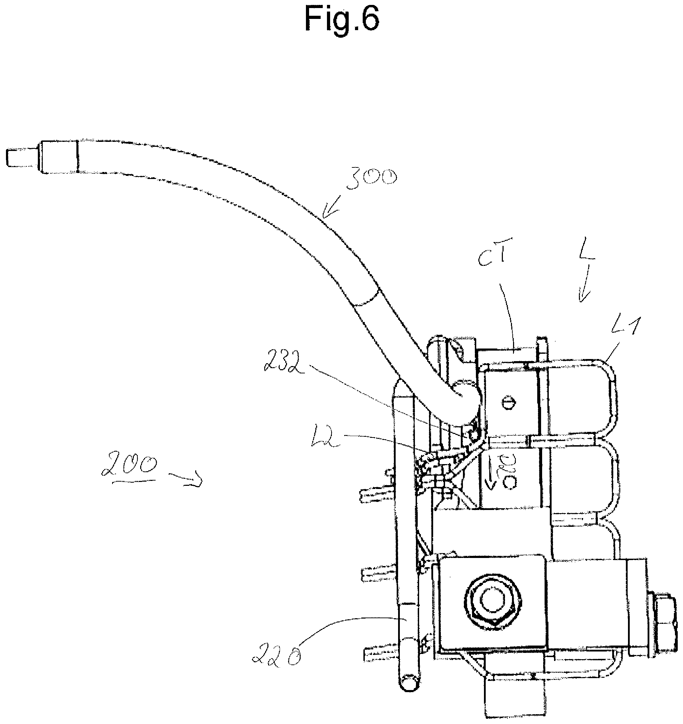

Figs. 5 and 6 show feeding unit 200 of the feeding device 100 according to Figs. 3 and 4. In Figs. 5 and 6, control pin 232 is extended and in the blocking position. That is, control pin 232 is moved upwardly by drive unit 234 so that it extends or protrudes into the gap between suspension element L in the pick-up position and the subsequently arranged suspension element L.

As further can be particularly seen in Fig. 6, suspension element L arranged in the pick-up position has already been "blocked" or deformed by control pin 232. That is, second or rear end L2 of foremost suspension element L has been held back or restrained by control pin 232 while suspension element L has been fed into or placed in the pick-up position. As a result, said suspension element L is deformed so that it is not positioned below the tip or front end 310 of catching needle 300. Accordingly, said suspension element L may be attached to a sausage-shaped product S but will not be captured or caught by catching needle 300.

For producing sausage-shaped products S on system 1, tubular packaging casing M stored on filling tube 10 of clipping machine CM and closed at its front end by a closure clip C, is filled with filling material that is fed through filling tube 10 into tubular packaging casing M in feeding direction F. After a predetermined portion of filling material is fed into tubular packaging casing M, upper and lower displacer elements of first and second displacer units 32, 34 are moved from their open position to their closed position to form a gathered portion or section to filled tubular packaging casing M. Thereafter, first displacer unit 32 carries out a linear movement in a horizontal direction and coaxially to feeding direction F. As a result, a plait-like portion P is formed on the gathered or shirred portion of tubular packaging casing M and two closure clips C are applied to plait-like portion P and closed by clipping device 20, a first closure clip C for closing the just filled tubular packaging casing M for forming a complete sausage-shaped product S, and a second closure clip C for closing the front end of sausage-shaped product S subsequently to be produced. A suspension element L is provided by feeding device 100 and attached to one end of sausage-shaped product S by means of one of closure clips C. For severing just produced sausage-shaped product S from the remaining supply of tubular packaging casing M, cutting device 40 is activated so that plait-like portion P is cut between two closure clips C just set and the sausage-shaped product S just produced can be discharged from clipping machine CM by discharge device 50. Suspension element L of sausage-shaped product S just produced is captured by catching unit 300 and guided towards a rod-like element, e.g. provided in a hanging line, to be suspended therefrom by suspension element L.

For enabling sausage-shaped product S produced in clipping machine M to be suspended on a rod-like element, means 230 for selectively or optionally deforming a suspension element L or deforming means 230 are in the release position. In the release position, control pin 232 is retracted towards drive unit 234 so that its upper end is arranged below suspension elements L disposed on carrier strip CT. This allows a suspension element L fed or guided into the pick-up position to pass deforming means 230 without being deformed, and particularly without engaging with control pin 232. Said suspension element L, when reaching the pick-up position, is positioned below catching unit 300, with an opened portion of suspension element L below the tip or front end 310 of catching unit 300.

A closure clip C moved by die 24 of clipping device 20 towards plait-like portion P, grips first end L1 of suspension element L and pulls suspension element L off carrier strip CT. Suspension element L is thereby captured by catching unit 300 and guided to a rod-like element on which sausage-shaped product S is suspended.

In specific or certain cases, a sausage-shaped product S needs to be removed from clipping machine CM, e.g. to check its weight. In these cases, a sausage-shaped product S is to be removed from clipping machine CM without suspension element L of said sausage-shaped product S being captured by catching unit 300, so that said sausage-shaped product is not be guided to a rod-like element.

For preventing suspension element L from being captured by catching unit 300, control pin 232 of deforming means 230 is moved in first direction D1 to the blocking position as shown in Fig 6, immediately before suspension element L to be attached to sausage-shaped product S is fed into the pick-up position.

In the blocking position, control pin 232 extends into the gap or space between a suspension element L in the pick-up position and a suspension element L that is subsequently arranged on carrier strip CT. The upper end of control pin 232 extends beyond suspension elements L on carrier strip CT and abuts against hold-down element 134 of holding down device 130. When a suspension element L is moved to the pick-up position, second end L2 is held back by control pin 232, while first end L1 is not affected, as can be seen particularly in Fig. 6. Suspension element L, in particular, second end L2, is deformed by control pin 232 so that said suspension element L may not be captured by catching unit 300, but can be attached to sausage-shaped product S just produced. Hold-down element 132 is made of an elastic material, such as rubber, so that it rests on the tip of control pin 232 in the blocking position and exerts a force thereon. Hold-down element 134 prevents second end L2 of suspension element L from unintentionally sliding across control pin 232 in the blocking position, and thus from being accidentally captured by catching unit 300.

Accordingly, said sausage-shaped product S is securely or certainly provided with a suspension element S, but it is not suspended on a rod-like element. Thus, said sausage-shaped product S may be removed from clipping machine CM for a quality check. Furthermore, since suspension element L does not have to be cut for removing sausage-shaped product S from clipping machine CM, said sausage-shaped product S may be reintroduced into the treatment process at a later stage.

As explained in conjunction with Fig. 4, deforming means 230 includes mounting plate 236 by which it is mounted to base plate 210 of feeding unit 200 by means of screw 237 extending through elongated hole 236a in base plate 210. For adapting the position of deforming means 230 to the size of suspension elements L, and particularly to their width, screw 237 may be loosened so that deforming means 230 may reversibly be shifted in second direction D2 that is aligned at least approximately parallel to feeding direction LF of suspension elements L. In case of suspension elements L which have a larger width, deforming means 230 may be shifted in second direction D2. For processing suspension elements L having a smaller width, deforming means 230 may be moved in counter direction of second direction D2, which corresponds to feeding direction LF of suspension elements L. Thereby, deforming means 230 may be adapted to the size of suspension elements L to be processed, and further to the kind and/or size of the catching unit.

Deforming means 230 may be controlled in various ways, e.g. dependent on the kind or size of sausage-shaped products to be produced and/or a selected interval for checking the quality of sausage-shaped products S. Preferably, deforming means 230 is coupled to control unit CU of clipping machine CM. Deforming means 230, and particularly drive unit 234, may be activated by control unit CU, e.g. in regular intervals, after a predefined number of sausage-shaped products S have been produced. This enables a periodic quality check. Alternatively, or additionally, deforming means 230 may be activated manually, e.g. via a separate switch or via a touch screen of clipping machine CM. Furthermore, the interval of activating deforming means 230 may individually be selected, e.g. by the operator.

In the embodiment of deforming means 230 shown in Figs. 2 to 6, drive unit 234 is realized in the form of a piston/cylinder drive. This piston/cylinder drive may be a hydraulic or pneumatic piston/cylinder drive. However, drive unit 230 my include other drives, such as an electric or magnetic drive which enables control pin 232 to be moved reversibly between the release position and the blocking position.

As shown in Fig. 2, hold-down element 134 has a slot provided at its free end facing in feeding direction LF of suspension elements L, into which the tip or front end of catching element 310 of catching unit 300 extends. This enables suspension element L, particularly its second end L2, not to slide unintentionally across or over control pin 232 in the blocking position. However, hold-down element 134 may also have other shapes which enable to prevent suspension element L from unintentionally sliding across control pin 232. It is only necessary that a portion of hold-down element 134 rests on control pin 132 when in the blocking position.

## Claims

1. A system (1) for producing sausage-shaped products (S) by filling a flowable or granular filling material into a tubular packaging casing (M), the system (1) including at least a clipping machine (CM) and a control unit (CU) for controlling at least the clipping machine (CM),
the clipping machine (CM) comprises:
- a clipping device (20) having first and second closing tools (22, 24) reversibly movable between an open position and a closed position for applying closure means (C), such as at least one closure clip, to a plait-like portion (P) formed on a filled and gathered tubular packaging casing (M), and closing said closure means (C) by moving the closing tools (22, 24) into their closed position,
the system (1) further comprises:
- a feeding device (100) for feeding flexible suspension elements (L) in a feeding direction (LF) to the clipping machine (CM) to a pick-up position for being attached to a sausage-shaped product (S) by means of the closure means (C), and
- a catching unit (300) for capturing a suspension element (L) attached to the sausage-shaped product (S),
wherein the feeding device (100) includes means (230) for selectively or optionally deforming a flexible suspension element (L) as it is fed into the pick-up position to prevent said flexible suspension element (L) from being captured by the catching unit (300).

2. The system (1) according to claim 1,
wherein the means (230) for selectively or optionally deforming a flexible suspension element (L) include at least at least one control pin (232), the control pin (232) is reversibly movable in a first direction (D1) between a release position, in which a suspension element (L) arranged in the pick-up position can be captured by the catching unit (300), and a blocking position, in which a suspension element (L) arranged in the pick-up position cannot be captured by the catching unit (300).

3. The system (1) according to claim 2,
wherein, in the blocking position, the control pin (232) engages a gap between a suspension element (L) arranged in the pick-up position for attachment to a sausage-shaped product (S) and a subsequent suspension element (L) to be attached next to a sausage-shaped product (S).

4. The system (1) according to claim 2 or 3,
wherein the first direction (D1) is oriented at least approximately perpendicular to the feeding direction (LF) of the suspension elements (L).

5. The system (1) according to any of claims 2 to 4,
wherein the control pin (232) is reversibly movable in a second direction (D2) that is oriented at least approximately parallel to the feeding direction (LF) of the suspension elements (L) for adapting the position of the control pin (232) to the size of the suspension elements (L).

6. The system (1) according to any one of claims 2 to 5,
wherein the means (230) for selectively or optionally deforming a flexible suspension element (L) include a drive unit (234) for reversibly driving the control pin (232) between the release position and the blocking position.

7. The system (1) according to any one of claims 1 to 6,
wherein the means (230) for deforming a flexible suspension element (L) is manually operable.

8. The system (1) according to any one of claims 1 to 6,
wherein the operation of the means (230) for deforming a flexible suspension element (L) is controlled by the control unit (CU).

9. The system (1) according to any one of claims 1 to 8,
wherein the feeding device (100) further includes a holding-down device (130) for holding down a suspension element (L) fed to the clipping machine.

10. The system (1) according to claim 9,
wherein the holding-down device (130) includes a hold-down element (134) arranged at least approximately vertically above the suspension elements (L) fed to the clipping machine (CM).

11. A method for controlling a system (1) for producing sausage-shaped products (S), like sausages, the method comprising the steps of:
- applying at least one closure means (C), such as a closure clip, to a plait-like portion (P) formed to a filled and gathered tubular packaging casing (M), and closing said closure means (C) by a clipping device (20) having first and second closing tools (22, 24) reversibly movable between an open position and a closed position,
- feeding flexible suspension elements (L) by a feeding device (100) in a feeding direction (LF) to the clipping machine (CM) into a pick-up position for attaching a suspension element (L) to a sausage-shaped product (S) by means of the at least one closure means (C),
- capturing a suspension element (L) attached to the sausage-shaped product (S) by a catching device (300), and
- deforming a flexible suspension element (L) by means (230) for selectively or optionally deforming a flexible suspension element (L), while it is fed into the pick-up position, such that said suspension element (L) is prevented from being captured by the catching device (300).

12. The method according to claim 11,
wherein a flexible suspension element (L) is selectively or optionally deformed by a control pin (232) of the means (230) for selectively or optionally deforming a flexible suspension elements (L), wherein the control pin (232) is reversibly movable in a first direction (D1) for deforming a suspension element (L), the control pin (232) being positioned in a blocking position.

13. The method according to claim 12,
further comprising the step of manually activating the means (230) for selectively or optionally deforming a suspension element (L), for reversibly moving the control pin (232) from a release position into the blocking position.

14. The method according to claim 12,
further comprising the step of automatically activating the means (230) for selectively or optionally deforming a suspension element (L), to reversibly move the control pin (232) from a release position into the blocking position.

15. The method according to any one of claims 12 to 14,
further comprising the step of adapting the position of the control pin (232) to the size of the suspension elements (L) by reversibly moving the control pin (232) of the means (230) for selectively or optionally deforming a suspension element (L) in a second direction (D2) that is oriented at least approximately parallel to the feeding direction (LF) of the flexible suspension elements (L).

## Patentansprüche

1. System (1) zum Herstellen wurstförmiger Produkte (S) durch Einfüllen eines fließfähigen oder körnigen Füllguts in eine schlauchförmige Verpackungshülle (M), wobei das System (1) wenigstens eine Clipmaschine (CM) und eine Steuereinheit (CU) zum Steuern von wenigstens der Clipmaschine (CM) umfasst,
wobei die Clipmaschine (CM) umfasst:
- eine Clipvorrichtung (20) mit einem ersten und einem zweiten Verschlusswerkzeug (22, 24), die reversibel zwischen einer offenen Stellung und einer geschlossenen Stellung beweglich sind, um ein Verschlussmittel (C), wie wenigstens eine Verschlussklammer, an einem zopfartigen Abschnitt (P) anzubringen, der an einer gefüllten und gerafften schlauchförmigen Verpackungshülle (M) ausgebildet ist, und das Verschlussmittel (C) zu schließen, indem die Verschlusswerkzeuge (22, 24) in ihre geschlossene Stellung bewegt werden,
wobei das System (1) ferner umfasst:
- eine Zuführvorrichtung (100) zum Zuführen flexibler Aufhängeelemente (L) in einer Zuführungsrichtung (LF) zu der Clipmaschine (CM) in eine Aufnahmeposition, um mittels der Verschlussmittel (C) an einem wurstförmigen Produkt (S) angebracht zu werden, und
- eine Auffangeinheit (300) zum Auffangen eines an dem wurstförmigen Produkt (S) angebrachten Aufhängeelements (L),
wobei die Zuführvorrichtung (100) Mittel (230) zum selektiven oder optionalen Verformen eines flexiblen Aufhängeelements (L) enthält, wenn es in die Aufnahmeposition zugeführt wird, um zu verhindern, dass das flexible Aufhängeelement (L) von der Auffangeinheit (300) aufgefangen wird.

2. System (1) nach Anspruch 1,
wobei die Mittel (230) zum selektiven oder optionalen Verformen eines flexiblen Aufhängeelements (L) wenigstens einen Steuerstift (232) umfassen, wobei der Steuerstift (232) reversibel in einer ersten Richtung (D1) zwischen einer Freigabeposition, in der ein in der Aufnahmeposition angeordnetes Aufhängeelement (L) von der Auffangeinheit (300) aufgefangen werden kann, und einer Blockierposition, in der ein in der Aufnahmeposition angeordnetes Aufhängeelement (L) nicht von der Auffangeinheit (300) aufgefangen werden kann, bewegbar ist.

3. System (1) nach Anspruch 2,
wobei der Steuerstift (232) in der Blockierposition in eine Lücke zwischen einem Aufhängeelement (L), das in der Aufnahmeposition zum Anbringen an einem wurstförmigen Produkt (S) angeordnet ist, und einem nachfolgenden Aufhängeelement (L), das als nächstes an einem wurstförmigen Produkt (S) angebracht werden soll, eingreift.

4. System (1) nach Anspruch 2 oder 3,
wobei die erste Richtung (D1) wenigstens annähernd rechtwinklig zur Zuführungsrichtung (LF) der Aufhängeelemente (L) ausgerichtet ist.

5. System (1) nach einem der Ansprüche 2 bis 4,
wobei der Steuerstift (232) in einer zweiten Richtung (D2), die wenigstens annähernd parallel zur Zuführungsrichtung (LF) der Aufhängeelemente (L) ausgerichtet ist, reversibel beweglich ist, um die Position des Steuerstifts (232) an die Größe der Aufhängeelemente (L) anzupassen.

6. System (1) nach einem der Ansprüche 2 bis 5,
wobei die Mittel (230) zum selektiven oder optionalen Verformen eines flexiblen Aufhängeelements (L) eine Antriebseinheit (234) zum reversiblen Antreiben des Steuerstifts (232) zwischen der Freigabeposition und der Blockierposition umfassen.

7. System (1) nach einem der Ansprüche 1 bis 6,
wobei die Mittel (230) zum Verformen eines flexiblen Aufhängeelements (L) manuell bedienbar sind.

8. System (1) nach einem der Ansprüche 1 bis 6,
wobei der Betrieb der Mittel (230) zur Verformung eines flexiblen Aufhängeelements (L) von der Steuereinheit (CU) gesteuert wird.

9. System (1) nach einem der Ansprüche 1 bis 8,
wobei die Zuführvorrichtung (100) ferner eine Niederhaltevorrichtung (130) zum Niederhalten eines der Clipmaschine zugeführten Aufhängeelements (L) umfasst.

10. System (1) nach Anspruch 9,
wobei die Niederhaltervorrichtung (130) ein Niederhalterelement (134) aufweist, das wenigstens annähernd senkrecht über den der Clipmaschine (CM) zugeführten Aufhängeelementen (L) angeordnet ist.

11. Verfahren zum Steuern eines Systems (1) zur Herstellung von wurstförmigen Produkten (S), wie Würsten, wobei das Verfahren die Schritte umfasst:
- Anbringen wenigstens eines Verschlussmittels (C), wie eines Verschlussclips, an einem zopfartigen Abschnitt (P), der an einer gefüllten und gerafften schlauchförmigen Verpackungshülle (M) ausgebildet ist, und Schließen des Verschlussmittels (C) durch eine Clipvorrichtung (20), die ein erstes und ein zweites Verschlusswerkzeug (22, 24) aufweist, die reversibel zwischen einer offenen Stellung und einer geschlossenen Stellung bewegbar sind,
- Zuführen von flexiblen Aufhängeelementen (L) durch eine Zuführvorrichtung (100) in einer Zuführungsrichtung (LF) zu der Clipmaschine (CM) in eine Aufnahmeposition zum Anbringen eines Aufhängeelements (L) an einem wurstförmigen Produkt (S) mittels des wenigstens einen Verschlussmittels (C),
- Auffangen eines an dem wurstförmigen Produkt (S) angebrachten Aufhängeelements (L) durch eine Auffangvorrichtung (300), und
- Verformen eines flexiblen Aufhängeelements (L) durch Mittel (230) zum selektiven oder optionalen Verformen eines flexiblen Aufhängeelements (L), während es in die Aufnahmeposition zugeführt wird, so dass das Aufhängeelement (L) daran gehindert wird, von der Auffangvorrichtung (300) aufgefangen zu werden.

12. Verfahren nach Anspruch 11,
wobei ein flexibles Aufhängeelement (L) selektiv oder optional durch einen Steuerstift (232) der Mittel (230) zur selektiven oder optionalen Verformung eines flexiblen Aufhängeelements (L) verformt wird, wobei der Steuerstift (232) reversibel in einer ersten Richtung (D1) beweglich ist, um ein Aufhängeelement (L) zu verformen, wobei der Steuerstift (232) in einer Blockierposition positioniert ist.

13. Verfahren nach Anspruch 12,
ferner den Schritt der manuellen Aktivierung der Mittel (230) zum selektiven oder optionalen Verformen eines Aufhängeelements (L) umfassend, um den Steuerstift (232) reversibel von einer Freigabeposition in die Blockierposition zu bewegen.

14. Verfahren nach Anspruch 12,
ferner den Schritt der automatischen Aktivierung der Mittel (230) zum selektiven oder optionalen Verformen eines Aufhängeelements (L) umfassend, um den Steuerstift (232) reversibel von einer Freigabeposition in die Blockierposition zu bewegen.

15. Verfahren nach einem der Ansprüche 12 bis 14,
ferner den Schritt des Einstellens der Position des Steuerstifts (232) auf die Größe der Aufhängeelemente (L) durch reversibles Bewegen des Steuerstifts (232) der Mittel (230) zum selektiven oder optionalen Verformen eines Aufhängeelements (L) in einer zweiten Richtung (D2) umfassend, die zumindest annähernd parallel zur Zuführungsrichtung (LF) der flexiblen Aufhängeelemente (L) ausgerichtet ist.

## Revendications

1. Système (1) de production de produits en forme de saucisse (S) par remplissage d'un matériau de remplissage fluide ou granulaire dans une enveloppe d'emballage tubulaire (M), le système (1) comprenant au moins une machine d'agrafage (CM) et une unité de commande (CU) destinée à commander au moins la machine d'agrafage (CM), la machine d'agrafage (CM) comprenant :
- un dispositif d'agrafage (20) présentant des premier et second outils de fermeture (22, 24) mobiles de manière réversible entre une position ouverte et une position fermée, destiné à appliquer des moyens de fermeture (C), tels qu'au moins une agrafe de fermeture, à une partie en forme de pli (P) formée sur une enveloppe d'emballage tubulaire (M) remplie et rassemblée, et à fermer lesdits moyens de fermeture (C) par déplacement des outils de fermeture (22, 24) dans leur position fermée,
le système (1) comprenant en outre :
- un dispositif d'alimentation (100) destiné à introduire des éléments de suspension souples (L) dans un sens d'alimentation (LF) vers la machine d'agrafage (CM) dans une position de prélèvement afin d'être fixés à un produit en forme de saucisse (S) au moyen des moyens de fermeture (C) et
- une unité de préhension (300) destinée à capturer un élément de suspension (L) fixé au produit en forme de saucisse (S),
le dispositif d'alimentation (100) comprenant des moyens (230) destinés à déformer sélectivement ou éventuellement un élément de suspension souple (L) au fur et à mesure de son introduction dans la position de prélèvement afin d'empêcher la capture dudit élément de suspension souple (L) par l'unité de préhension (300).

2. Système (1) selon la revendication 1,
les moyens (230) destinés à déformer sélectivement ou éventuellement un élément de suspension souple (L) comprenant au moins une broche de commande (232), la broche de commande (232) étant mobile de manière réversible dans un premier sens (D1) entre une position de libération, dans laquelle un élément de suspension (L) agencé dans la position de prélèvement peut être capturé par l'unité de préhension (300), et une position de blocage, dans laquelle un élément de suspension (L) agencé dans la position de prélèvement ne peut pas être capturé par l'unité de préhension (300).

3. Système (1) selon la revendication 2,
la broche de commande (232), dans la position de blocage, venant en prise avec un interstice entre un élément de suspension (L) agencé dans la position de prélèvement pour la fixation à un produit en forme de saucisse (S) et un élément de suspension (L) subséquent à fixer ensuite à un produit en forme de saucisse (S).

4. Système (1) selon la revendication 2 ou 3,
le premier sens (D1) étant orienté au moins approximativement perpendiculairement au sens d'alimentation (LF) des éléments de suspension (L).

5. Système (1) selon l'une quelconque des revendications 2 à 4,
la broche de commande (232) étant mobile de manière réversible dans un second sens (D2) qui est orienté au moins approximativement parallèlement au sens d'alimentation (LF) des éléments de suspension (L) afin d'adapter la position de la broche de commande (232) à la dimension des éléments de suspension (L).

6. Système (1) selon l'une quelconque des revendications 2 à 5,
les moyens (230) destinés à déformer sélectivement ou éventuellement un élément de suspension souple (L) comprenant une unité d'entraînement (234) destinée à entraîner de manière réversible la broche de commande (232) entre la position de libération et la position de blocage.

7. Système (1) selon l'une quelconque des revendications 1 à 6,
les moyens (230) destinés à déformer un élément de suspension souple (L) pouvant être actionnés manuellement.

8. Système (1) selon l'une quelconque des revendications 1 à 6,
l'actionnement des moyens (230) destinés à déformer un élément de suspension souple (L) étant commandé par l'unité de commande (CU).

9. Système (1) selon l'une quelconque des revendications 1 à 8,
le dispositif d'alimentation (100) comprenant en outre un dispositif de maintien (130) destiné à maintenir un élément de suspension (L) fourni à la machine d'agrafage.

10. Système (1) selon la revendication 9,
le dispositif de maintien (130) comprenant un élément de maintien (134) agencé au moins approximativement verticalement au-dessus des éléments de suspension (L) fournis à la machine d'agrafage (CM).

11. Procédé de commande d'un système (1) de production de produits en forme de saucisse (S), tels que des saucisses, le procédé comprenant les étapes de :
- application d'au moins un moyen de fermeture (C), tel qu'une agrafe de fermeture, à une partie en forme de pli (P) formée sur une enveloppe d'emballage tubulaire (M) remplie et rassemblée, et fermeture dudit moyen de fermeture (C) par un dispositif d'agrafage (20) présentant des premier et second outils de fermeture (22, 24) mobiles de manière réversible entre une position ouverte et une position fermée,
- introduction des éléments de suspension souples (L) par un dispositif d'alimentation (100) dans un sens d'alimentation (LF) vers la machine d'agrafage (CM) dans une position de prélèvement afin de fixer un élément de suspension (L) à un produit en forme de saucisse (S) au moyen dudit au moins un moyen de fermeture (C),
- capture d'un élément de suspension (L) fixé au produit en forme de saucisse (S) par un dispositif de préhension (300) et
- déformation d'un élément de suspension souple (L) par des moyens (230) destinés à déformer sélectivement ou éventuellement un élément de suspension souple (L), pendant qu'il est introduit dans la position de prélèvement, de telle sorte que la capture dudit élément de suspension (L) par le dispositif de préhension (300) est empêchée.

12. Procédé selon la revendication 11,
un élément de suspension souple (L) étant sélectivement ou éventuellement déformé par une broche de commande (232) des moyens (230) destinés à déformer sélectivement ou éventuellement des éléments de suspension souples (L), la broche de commande (232) étant mobile de manière réversible dans un premier sens (D1) afin de déformer un élément de suspension (L), la broche de commande (232) étant positionnée dans une position de blocage.

13. Procédé selon la revendication 12,
comprenant en outre l'étape d'activation manuelle des moyens (230) destinés à déformer sélectivement ou éventuellement un élément de suspension (L), afin de déplacer de manière réversible la broche de commande (232) à partir d'une position de libération dans la position de blocage.

14. Procédé selon la revendication 12,
comprenant en outre l'étape d'activation automatique des moyens (230) destinés à déformer sélectivement ou éventuellement un élément de suspension (L), afin de déplacer de manière réversible la broche de commande (232) à partir d'une position de libération dans la position de blocage.

15. Procédé selon l'une quelconque des revendications 12 à 14,
comprenant en outre l'étape d'adaptation de la position de la broche de commande (232) à la dimension des éléments de suspension (L) par déplacement réversible de la broche de commande (232) des moyens (230) destinés à déformer sélectivement ou éventuellement un élément de suspension (L) dans un second sens (D2) qui est orienté au moins approximativement parallèlement au sens d'alimentation (LF) des éléments de suspension souples (L).
